(19) Europäisches Patentamt

European Patent Office

Office européen des brevets

(11) **EP 1 166 099 B1**

(12) **FASCICULE DE BREVET EUROPEEN**

(45) Date de publication et mention
de la délivrance du brevet:
**15.09.2004 Bulletin 2004/38**

(21) Numéro de dépôt: **99911891.2**

(22) Date de dépôt: **07.04.1999**

(51) Int Cl.⁷: $G01N\ 27/447$

(86) Numéro de dépôt international:
**PCT/FR1999/000800**

(87) Numéro de publication internationale:
**WO 2000/060342 (12.10.2000 Gazette 2000/41)**

(54) **DETECTEUR DE FLUORESCENCE INDUITE PAR LASER ET PROCEDE DE MISE EN OEUVRE DUDIT DISPOSITIF**

DETEKTOR FÜR LASER-INDUZIERTE FLUORESZENZ UND ANWENDUNGSVERFAHREN FÜR DIESES GERÄT

LASER-INDUCED FLUORESCENCE DETECTOR AND METHOD FOR THE IMPLEMENTATION OF SAID DEVICE

(84) Etats contractants désignés:
**DE FR GB**

(43) Date de publication de la demande:
**02.01.2002 Bulletin 2002/01**

(73) Titulaire: **Picometrics**
**31520 Ramonville Saint Agne (FR)**

(72) Inventeurs:
• **COUDERC, François**
**F-31200 Toulouse (FR)**
• **NERTZ, Michel**
**F-31570 Sainte Foy d'Aigrefeuille (FR)**
• **NOUADJE, Georges**
**F-91000 Evry (FR)**

(74) Mandataire: **Abello, Michel et al**
**Cabinet Peuscet,**
**78, avenue Raymond Poincaré**
**75116 Paris (FR)**

(56) Documents cités:
**EP-A- 0 416 234       EP-A- 0 634 651**
**US-A- 5 061 361       US-A- 5 658 446**

• **NOUADJE G ET AL: "Ball-lens laser-induced fluorescence detector as an easy-to-use highly sensitive detector for capillary electrophoresis Application to the identification of biogenic amines in dairy products" JOURNAL OF CHROMATOGRAPHY A, vol. 717, no. 1, 24 novembre 1995, page 335-343 XP004038556**

## Description

La présente invention se rapporte à un détecteur de fluorescence induite par laser. L'invention se rapporte aussi à un procédé pouvant être mis en oeuvre par ce dispositif.

L'invention est particulièrement bien adaptée à l'identification de substances inconnues et le dosage de composés sous forme de traces qui ont été séparés par différents moyens:

a) par chromatographie liquide à haute performance (ci-après HPLC), avec détection après la colonne sur un capillaire activé ou désactivé, de faible diamètre interne, branché à la sortie de la colonne chromatographique ;

b) par micro-chromatographie liquide à haute performance (ci-après micro-HPLC) avec détection sur la colonne dans un capillaire de très faible diamètre interne ;

c) par électrophorèse capillaire (ci-après CE) ou électro-chromatographie capillaire (ci-après CEC) avec détection sur la colonne capillaire.

Les techniques antérieures, qui incluaient la détection de fluorescence induite par laser (ci-après LIF) et les techniques HPLC et CE, chacune avec un capillaire de silice de très faible diamètre, ont été utilisées avec succès pour analyser des échantillons dont la structure moléculaire est assez petite (voir notamment brevets US-A-4 675 300 et US-A-4 548 498).

La HPLC et la CE, associées avec les détecteurs d'absorption UV-visible sont très communément utilisés pour l'identification d'une très large gamme de différents produits dans des échantillons dont la composition n'est pas connue. Par exemple, le brevet US-A-5 061 361 décrit un appareil pour augmenter la sensibilité d'un détecteur d'absorption UV en électrophorèse capillaire de zone. Les moyens de détection comprennent une cellule unique sur le capillaire qui présente une zone dilatée dans la partie du capillaire servant à la détection, et qui utilise des contours géométriques spécifiques qui empêchent mélange laminaire et turbulence quand on utilise un pompage électro-osmotique ou par pression. Ceci est dénommé "cellule de détection de capillaire élargie (ou cellule ovoïde)", dans laquelle une substance inconnue migre et est soumise à une lumière ultraviolette. Une partie de la lumière est absorbée par la substance inconnue. Néanmoins, les détecteurs d'absorption UV-visibles sont limités en terme de sensibilité : pour identifier de très faibles concentrations de substances, la détection LIF est, par conséquent, nécessaire. Le brevet EP-A- 0 634 651 propose, certes, un montage utilisant un capillaire de section élargi pour un système de CE avec un détecteur d'absorption UV-visible ou un fluorimètre conventionnel, dans lequel la fluorescence produite par la lumière non cohérente est collectée orthogonalement, et le faisceau excitateur est focalisé dans la partie de section plus large à l'extrémité du détecteur. Mais le mode de focalisation utilisé n'est pas compatible avec un volume irradié important tel que requis pour la LIF. Le brevet US-A-5 037 199 présente aussi l'assemblage d'une cellule pouvant être utilisée en analyse spectrophotométrique ou pour la détection, sur colonne, d'une substance à l'intérieur d'un petit volume d'échantillon. Une première lentille en forme de bille, peut être utilisée pour transmettre la lumière non cohérente qui excite un échantillon, pendant qu'une autre lentille en forme de bille peut être utilisée pour collecter la fluorescence. Le faisceau excitateur est disposé de façon à être focalisé dans le capillaire, et un liquide de même indice de réfraction peut être utilisé pour faciliter la transmission de la lumière à l'intérieur du capillaire. Mais, là encore, le mode de focalisation utilisé n'est pas compatible avec un volume irradié important requis pour la LIF.

La fluorimétrie laser est très différente de la fluorimétrie à lampe à arc et comporte certaines caractéristiques principales, qui sont avantageuses avec un détecteur fonctionnant sur de très faibles volumes. La radiation de fluorescence produite est directement proportionnelle à l'intensité de la lumière d'excitation. La stabilité de l'amplitude du laser aide aussi à minimiser le bruit de fond.

On sait que la fluorescence dF provenant d'un volume dV est donnée par :

$$dF = C\varepsilon\phi\,(P/S)\,dV$$

formule dans laquelle :

C est la concentration du fluorophore ;

$\varepsilon$ est le coefficient d'absorption molaire ;

$\phi$ est le rendement quantique de fluorescence du fluorophore ;

P est la puissance de la lumière excitant le fluorophore à l'intérieur du capillaire ;

S est la section du faisceau lumineux excitant les molécules.

Pour que l'on obtienne le niveau de fluorescence le plus important possible, le volume excité contenant les molécules fluorescentes doit donc être le plus grand possible.

Avec la détection LIF, au moins quatre problèmes ont été résolus:

- maximisation du volume irradié
- maximisation de la collecte de la fluorescence
- maintien de la meilleure efficacité de séparation (variance due à la détection) et,
- maintien d'une moindre diffusion de la lumière.

Dans les publications J. Chromatogr. 559 (1991) p. 183-196 et 652 (1993), p. 399-405, on indique qu'une optique ayant une grande ouverture numérique est indispensable pour collecter le plus haut niveau de fluorescence sur le capillaire et pour avoir le plus bas niveau de bruit de fond, et on montre l'évolution de la fluorescence en fonction du diamètre interne du capillaire pour un objectif de haute ouverture numérique. L'intensité de la fluorescence augmente de façon importante en fonction du diamètre dans la zone des très petits diamètres internes (< 15µm), puis elle reste à peu près constante, et enfin, elle décroît pour de plus gros diamètres.

Les causes principales de la diffusion de la lumière en LIF sont :

- les réflexions sur les éléments optiques, incluant les parois de silice du capillaire,
- la diffusion due au tampon circulant dans le capillaire,
- des phénomènes physiques tels que la diffusion Raman.

Selon l'invention, ces désavantages peuvent être surmontés avec un montage de détection "colinéaire", notamment parce que la rétro-diffusion Raman est évitée dans l'axe d'excitation comme indiqué dans J. Chromatogr. 559 (1991) précité (comparé à son proche niveau maximum dans une direction orthogonale au faisceau incident). Les autres causes peuvent être maîtrisées en ajustant correctement les faisceaux lumineux et en plaçant à une position appropriée un filtre spatial ou un diaphragme d'un diamètre sélectionné (0.5 à 1.5mm). L'utilisation d'une cellule ayant des formes géométriques spécifiques empêche le mélange laminaire et la turbulence, ce qui est nécessaire pour maintenir la meilleure efficacité de séparation.

Dans le présent texte, l'expression "substance fluorescant à la longueur d'onde du laser" signifie "substance émettant une fluorescence à la longueur d'onde du laser". En outre, le mot "colinéaire" ne doit pas être entendu au sens géométrique du terme mais signifie, dès lors qu'il s'applique à des faisceaux optiques, que lesdits faisceaux suivent des chemins voisins dans la même direction, mais pas nécessairement confondus ni dans le même sens.

L'objectif de cette invention est donc de proposer un dispositif de LIF, pour HPLC ou CE, ayant une sensibilité accrue grâce à l'utilisation de capillaire de diamètre interne substantiellement plus grand que 15µm, ayant une cellule de détection élargie et une lentille en forme de bille, permettant le plus grand volume irradié possible et la meilleure efficacité pour collecter la fluorescence.

Cet objectif est atteint avec un détecteur de fluorescence induite_par laser comprenant:

- des moyens pour émettre un faisceau laser,
- une cellule à l'intérieur d'un capillaire, ladite cellule recevant un soluté, qui contient au moins une substance inconnue fluorescant à la longueur d'onde du laser, et comportant des contours géométriques spécifiques afin d'éviter le mélange laminaire et la turbulence pendant l'écoulement dudit soluté,
- des moyens d'illumination, par ledit faisceau laser, de ladite substance fluorescente s'écoulant dans la cellule du capillaire, ces moyens générant un faisceau divergent, qui illumine le volume de la cellule,
- des moyens de collecte de la fluorescence émise par la substance fluorescente dans la cellule, l'émission laser, le capillaire et la collecte de fluorescence étant mis en place pour coopérer optiquement de façon colinéaire,
- des moyens pour filtrer la fluorescence collectée,
- des moyens utilisant un tube photomultiplicateur pour traiter la fluorescence filtrée, et
- des moyens pour analyser les signaux générés par les moyens utilisant un tube photo multiplicateur et pour présenter les résultats de ladite analyse.

Un capillaire élargi comportant des contours géométriques spécifiques pour constituer la cellule permet d'exciter par le faisceau laser une quantité de substance inconnue plus grande que dans un capillaire cylindrique classique. La sensibilité du détecteur de la fluorescence induite par laser est augmentée de manière significative en utilisant, par exemple, le type de cellule proposé par le brevet US-A- 5 061 361 précité, pourvu que tout le volume de la cellule soit irradié par le faisceau laser. L'utilisation d'une cellule de formes géométriques spécifiques prévenant à la fois mélange laminaire et turbulence est nécessaire pour maintenir la meilleure efficacité de séparation.

Avantageusement, les moyens pour illuminer par le faisceau laser la substance fluorescente s'écoulant dans la cellule du capillaire comportent, d'une part, une lentille d'émission fournissant un faisceau laser légèrement convergent et, d'autre part, un moyen optique à haute ouverture numérique convertissant ledit faisceau légèrement convergent pour obtenir le faisceau divergent, qui illumine le volume de la cellule ; on peut prévoir que la distance entre la lentille d'émission et le moyen optique à haute ouverture numérique destiné à illuminer la cellule est ajustée de façon à focaliser le faisceau laser à l'intérieur dudit moyen optique à haute ouverture numérique, le point focal étant proche de la surface externe dudit moyen optique à haute ouverture numérique ; de préférence, les moyens d'illumination et la cellule sont conformés et ont un positionnement relatif de façon à rendre maximal le volume de substance fluorescente illuminé par le faisceau laser. On peut prévoir que les moyens de collecte de la fluorescence incluent un moyen optique à haute ouverture numérique ; la lentille d'émission, le capillaire et les moyens de collecte de la fluorescence émise étant disposés colinéairement, le moyen optique à haute ouverture numérique utilisé pour l'illumination de la cellule et celui inclus dans les moyens de collecte peuvent être constitués par un moyen unique. L'utilisation de moyens optiques à haute ouverture numérique pour collecter la fluorescence permet de maximiser l'efficacité de la collecte et maintient au plus bas le niveau de diffusion de lumière laser. Les caractéristiques du faisceau laser donnent une opportunité unique pour avoir le maximum d'irradiance dans le capillaire.

Avantageusement, le moyen optique unique à haute ouverture numérique est une lentille en forme de bille, par exemple une bille de saphir.

Le système optique selon l'invention est, de préférence, conçu pour que le faisceau laser soit focalisé dans la lentille en forme de bille pour obtenir un faisceau divergent dans la cellule : en ajustant les éléments du système, le diamètre de sortie du faisceau peut être modifié de manière que le volume interne total de la cellule soit illuminé ; il est particulièrement avantageux que les moyens d'illumination et les moyens de collecte soient constitués par les mêmes moyens optique.

Dans un mode de réalisation préféré, la cellule est ménagée à l'intérieur d'un capillaire de silice fondue ; elle peut être de forme sensiblement ovoïde ; dans une variante, la forme ovoïde de la cellule est un ellipsoïde.

L'utilisation d'une cellule conventionnelle sur un capillaire de très petit diamètre interne (qui permet d'avoir de très hautes résolutions chromatographiques et électrophorétiques) conduit à de basses sensibilités. La combinaison d'une cellule ovoïde avec un petit diamètre interne de capillaire et une lentille en forme de bille, notamment en saphir, de très haute ouverture numérique, permet de contrôler la divergence du faisceau laser et conduit a un volume illuminé optimal et au meilleur rendement de collecte, donc, à une meilleure sensibilité. De cette façon, un faible diamètre interne pour le capillaire n'est plus antinomique avec une haute sensibilité de détection. De plus, l'arrangement colinéaire utilisé permet d'avoir une faible diffusion de lumière, conduisant à un meilleur rapport signal/bruit, donc à une meilleure sensibilité par rapport aux autres arrangements optiques.

De préférence, on utilise une lentille de saphir en forme de bille, car une telle lentille combine un indice de réfraction important et une forme sphérique, ce qui permet d'obtenir une haute ouverture numérique, qui peut, d'ailleurs, être augmentée en utilisant, entre la lentille et le capillaire, un liquide d'indice de réfraction approprié. De plus la transmission correcte de la lumière par le saphir permet la possible utilisation future de la fluorescence induite par laser dans le domaine UV et IR, avec les lasers appropriés, et à un coût raisonnable.

Avantageusement, les moyens pour émettre le faisceau laser, la lentille d'émission, le moyen optique à haute ouverture numérique destiné à illuminer la cellule et ladite cellule elle-même sont disposés de façon que le faisceau laser atteigne la lentille d'émission légèrement décalé par rapport à son axe et ensuite atteigne le moyen optique à haute ouverture numérique en faisant un petit angle avec ledit axe.

Les détecteurs de fluorescence induite par laser fonctionnant selon l'invention peuvent être utilisés en chromatographie liquide et en CE.

L'invention a, en conséquence, aussi pour objet un appareil d'électrophorèse capillaire ou un appareil de chromatographie liquide incluant un détecteur de fluorescence induite par laser tel que ci-dessus défini.

Un autre aspect de l'invention a trait à un procédé pour identifier des substances inconnues, comprenant les étapes suivantes:

- émettre un faisceau laser vers une cellule ménagée à l'intérieur d'un capillaire, ladite cellule recevant un soluté contenant au moins une substance inconnue, qui génère une fluorescence à la longueur d'onde du laser, ladite cellule comportant des contours géométriques spécifiques pour éviter mélange laminaire et turbulence pendant l'écoulement du soluté,
- illuminer ladite substance fluorescente par ledit faisceau laser grâce à des moyens optiques générant un faisceau divergent qui illumine le volume de la cellule,
- collecter la fluorescence émise par la substance fluorescente, l'émission laser, le capillaire et la collecte de la fluorescence étant mis en place pour coopérer optiquement de façon colinéaire,
- collecter et filtrer la fluorescence,
- transmettre la fluorescence filtrée vers un tube photomultiplicateur,
- analyser les signaux générés par le tube photomultiplicateur et présenter les résultats de l'analyse.

Avantageusement, le procédé selon l'invention peut, en outre, être caractérisé par le fait que l'on convertit d'abord le faisceau laser en un faisceau légèrement convergent grâce à une lentille d'émission de faible ouverture numérique et que l'on convertit ensuite ce faisceau convergent en un faisceau divergent grâce à une lentille à haute ouverture numérique. Au surplus, avantageusement, on utilise pour collecter la fluorescence les mêmes moyens optiques que pour illuminer la cellule.

Selon le mode de mise en oeuvre préféré du procédé selon l'invention, l'étape d'émission du laser inclut une étape pour concentrer le faisceau laser dans la bille et diriger le faisceau divergent obtenu vers l'intérieur de la cellule ovoïde. L'étape de collecte de fluorescence utilise la même bille, qui a une très grande ouverture numérique. La cellule ovoïde a des formes géométriques spécifiques pour prévenir le mélange laminaire et la turbulence pendant l'écoulement du soluté.

En utilisant le procédé selon l'invention, une augmentation de la sensibilité par un facteur 10 laisse plusieurs possibilités à un développeur d'instrument. Par exemple, un laser de basse puissance peut être utilisé pour la même sensibilité, mais avec une réduction de prix significative qui peut être bien au dessus de 70%, parce que cela permet l'utilisation possible d'un laser à diode ou laser basé sur une diode (lasers pompés par une diode, dont la fréquence est doublée ou triplée). Cette réduction de coût est un facteur important pour pouvoir augmenter le nombre des utilisateurs potentiels de ces techniques d'identification. De plus, cela rend possible la détection des espèces en très basses concentrations éluées dans un capillaire, qui ne peuvent pas être détectées avec d'autre moyens de détection de fluorescence induite par lasers classiques.

Pour mieux faire comprendre l'objet de l'invention, on va en décrire maintenant, à titre d'exemple purement illustratif et non limitatif, un mode de réalisation représenté sur le dessin annexé.

Sur ce dessin :

- la figure 1 montre une vue schématique d'un détecteur selon l'invention, avec un montage optique colinéaire ;
- la figure 2 montre, en détail, le profil du faisceau laser au travers de l'ensemble (lentille en forme de bille/cellule ovoïde) dans le plan de la figure 1 ;
- la figure 3 montre, en détail, le profil du faisceau laser au travers de l'ensemble (lentille en forme de bille/cellule ovoïde) vu dans le plan repéré par III-III sur la figure 1.

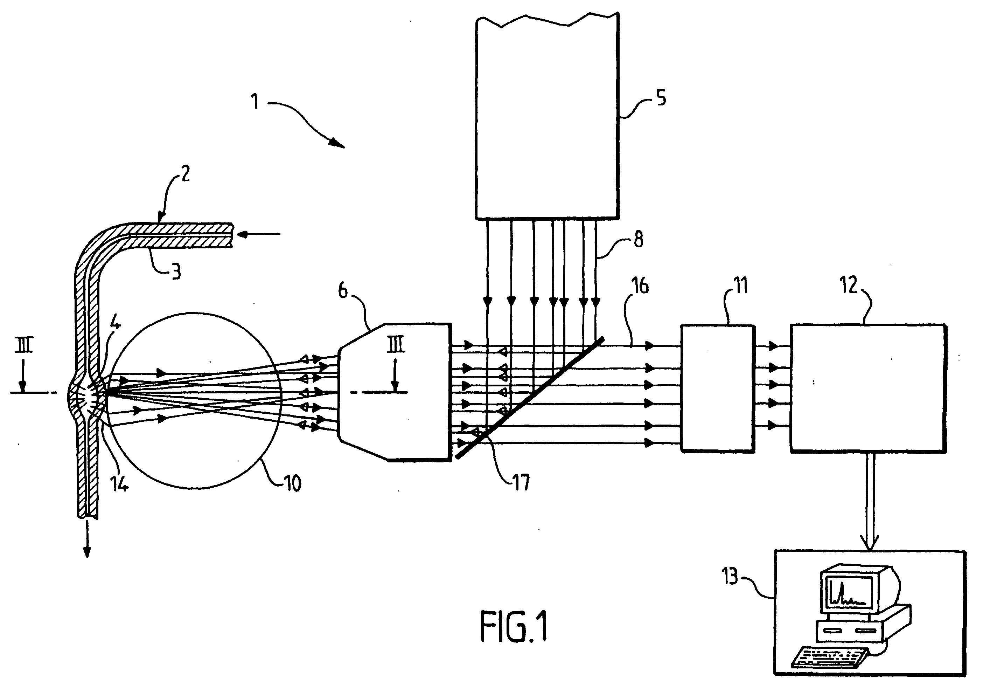

Sur la figure 1, on voit que les moyens d'émission et de collecte sont disposés colinéairement. Le détecteur 1 selon l'invention comprend une source laser 5 émettant un faisceau laser 8, un miroir dichroïque 17 déviant orthogonalement le faisceau laser 8 au travers d'une lentille de faible ouverture numérique 6 vers une lentille de saphir 10 en forme de bille de faible diamètre, par exemple un diamètre d'environ 1 à 3 mm. La lentille 10 opère comme un moyen optique de haute ouverture numérique pour illuminer avec le faisceau laser 8 une cellule ovoïde 4 et pour collecter la fluorescence induite en fournissant un faisceau collecté substantiellement parallèle. Le faisceau collecté 16 est filtré par un jeu de filtres 11 et illumine un tube photomultiplicateur 12 délivrant des signaux indicatifs de l'intensité de fluorescence. Les signaux sont traités et analysés par un ordinateur 13 ou un système analogue.

La bille de saphir a son centre sur l'axe de la lentille 6 ; la bille convertit le faisceau laser légèrement convergent venant de la lentille 6 en un petit faisceau divergent, qui englobe le volume intérieur total de la cellule ovoïde 4, quand les caractéristiques du faisceau convergent sont optimisées (diamètre du faisceau laser, ouverture numérique de la lentille 6, distance entre la lentille 6 et la bille 10 de saphir). Pour obtenir ce petit faisceau divergent, le faisceau laser atteint la lentille 6 légèrement en-dehors de l'axe du système, puis atteint la bille de saphir 10 en faisant un petit angle par rapport à l'axe et en-dehors de l'axe. En ajustant la distance entre la lentille 6 et la bille de saphir, le faisceau laser peut être focalisé en F à l'intérieur de la bille, le point focal F étant proche de la surface externe de la bille de façon que le faisceau divergent provenant de la bille de saphir pour illuminer la cellule ovoïde 4 puisse être ajusté de 20 à 250μm.

La bille de saphir de haute ouverture numérique convertit le cône de lumière fluorescente très divergente provenant du volume de l'échantillon, en un cône de lumière légèrement divergent qui est virtuellement colimaté par la lentille 6 et peut être couplé à des moyens appropriés permettant de mesurer la lumière, tel que le tube photomultiplicateur 12.

De plus l'arrangement colinéaire, utilisant le même montage optique pour l'émission et la collecte de la lumière supprime la difficulté de mettre deux dispositifs optiques à la même position proche du faible diamètre du capillaire (usuellement 375μm de diamètre extérieur), comme cela serait nécessaire dans un montage orthogonal.

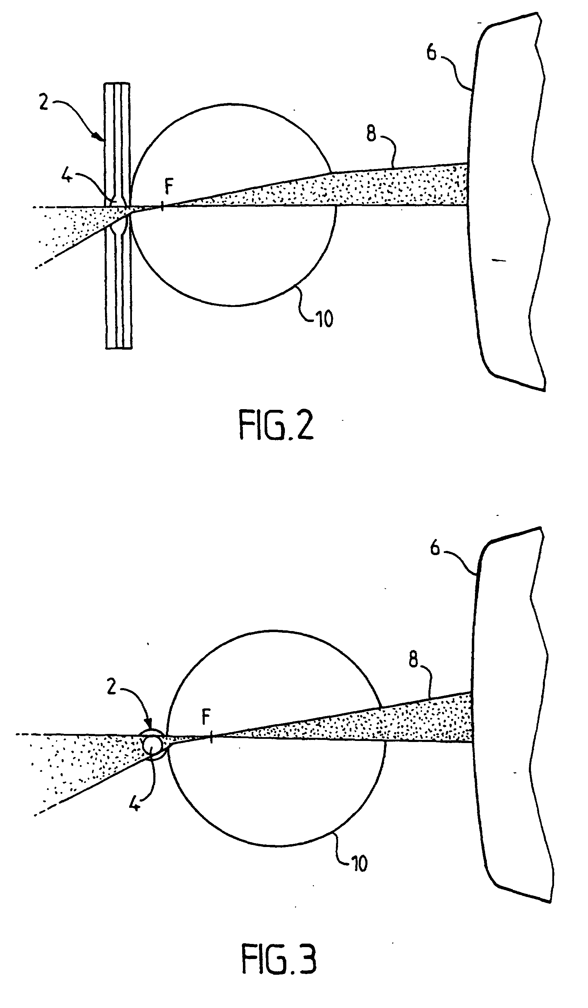

La figure 2 montre la haute ouverture numérique de la bille ; le faisceau laser légèrement convergent est focalisé dans la bille, d'où résulte un faisceau laser divergent émergeant de la bille de saphir et illuminant le volume interne total de la cellule ovoïde.

Un liquide 3 contenant une substance inconnue qui émet de la fluorescence à la longueur d'onde du laser, s'écoule dans la cellule 4 à partir de la colonne chromatographique (ou microcolonne) ou d'un système d'électrophorèse capillaire (non représenté).

Dans le cas d'une colonne chromatographique (ou d'une microcolonne), le capillaire 2 est un capillaire de faible diamètre activé ou désactivé avec un diamètre interne de 50 à 350μm selon le débit ; dans le cas d'un système d'électrophorèse capillaire, le capillaire 2 est un capillaire de faible diamètre avec un diamètre interne inférieur à 100μm.

Dans une réalisation préférée d'un détecteur 1 selon l'invention, la source laser 5 peut être un laser Argon 488 nm (ILT, Salt Lake City (Utah)), avec une puissance d'émission maximum de 7 mW, ou un laser 543 nm HeNe de Melles Griot, Irvine (California), avec une puissance maximum de 1,5 mW. La lentille 6 est un objectif 5x0,12 Achrostigmat (Zeiss (Germany)).

Le capillaire 2 est un capillaire de silice fondue de 70 cm de long (ref. 75 μm diamètre interne, 375 μm diamètre externe) de Polymicro Technology Phoenix (Arizona). Le capillaire 2 est inclus dans l'appareil d'électrophorèse capillaire, par exemple un Spectra-PHORESIS 100 TSP (Fremont (Californie). Le tube photomultiplicateur (PMT) 12 est un PMT R928 d'Hamamatsu Photonics (Japon). Le signal de sortie du PMT est traité par un ordinateur 13, par exemple un modèle 486 Personnal Computer, utilisant un système d'acquisition de données.

## Revendications

1. Détecteur de fluorescence induite par laser comprenant:

   - des moyens (5) pour émettre un faisceau laser (8),
   - une cellule (4) à l'intérieur d'un capillaire (2), ladite cellule (4) recevant un soluté qui contient au moins une substance inconnue fluorescant à la longueur d'onde du laser et comportant des contours géométriques spécifiques afin d'éviter le mélange laminaire et la turbulence pendant l'écoulement dudit soluté,
   - des moyens d'illumination (6, 10), par ledit faisceau laser, de ladite substance fluorescente s'écoulant dans la cellule (4) du capillaire (2), ces moyens générant un faisceau divergent qui illumine le volume de la cellule (4),
   - des moyens de collecte (10, 6) de la fluorescence émise par la substance fluorescente dans la cellule (4), l'émission laser, le capillaire (2) et la collecte de la fluorescence étant mis en place pour coopérer optiquement de façon colinéaire,
   - des moyens (11) pour filtrer ladite fluorescence collectée,
   - des moyens utilisant un tube photomultiplicateur (12) pour traiter la fluorescence filtrée, et
   - des moyens (13) pour analyser les signaux générés par lesdits moyens utilisant un tube photomultiplicateur (12) et pour présenter les résultats de ladite analyse.

2. Détecteur selon la revendication 1, **caractérisé par le fait que** les moyens d'illumination (6, 10) comportent, d'une part, une lentille (6) d'émission fournissant un faisceau laser légèrement convergent et, d'autre part, un moyen optique (10) à haute ouverture numérique convertissant ledit faisceau légèrement convergent pour obtenir le faisceau divergent, qui illumine le volume de la cellule (4).

3. Détecteur selon la revendication 2, **caractérisé par le fait que** la distance entre la lentille (6) d'émission et le moyen optique (10) à haute ouverture numérique destiné à illuminer la cellule (4) est ajustée de façon à focaliser le faisceau laser à l'intérieur dudit moyen optique (10) à haute ouverture numérique, le point focal F étant proche de la surface externe dudit moyen optique (10) à haute ouverture numérique.

4. Détecteur selon la revendication 3, **caractérisé par le fait que** les moyens d'illumination (6, 10) et la cellule (4) sont conformés et ont un positionnement relatif de façon à rendre maximal le volume de substance fluorescente illuminé par le faisceau laser.

5. Détecteur selon l'une des revendications 1 ou 4, **caractérisé par le fait que** les moyens de collecte de la fluorescence incluent un moyen optique (10) à haute ouverture numérique.

6. Détecteur selon la revendications 5 prise en combinaison avec l'une des revendications 2 à 4, **caractérisé par le fait que** le moyen optique à haute ouverture numérique utilisé pour l'illumination de la cellule est confondu avec celui inclus dans les moyens de collecte.

7. Détecteur selon l'une des revendications 2 à 4 prise seule ou en combinaison avec l'une des revendications 5 ou 6, **caractérisé par le fait que** le moyen optique à haute ouverture numérique utilisé pour l'illumination de la cellule et/ou pour les moyens de collecte est une lentille (10) en forme de bille.

8. Détecteur selon la revendication 7, **caractérisé par le fait que** la lentille en forme de bille est une bille (10) de saphir.

9. Détecteur selon l'une des revendications 1 à 8, **caractérisé par le fait que** les moyens pour émettre le faisceau laser, la lentille d'émission (6), le moyen optique (10) à haute ouverture numérique destiné à illuminer la cellule (4) et ladite cellule (4) elle-même sont disposés de façon que le faisceau laser atteigne la lentille (6) d'émission légèrement décalé par rapport à son axe et ensuite atteigne le moyen optique (10) à haute ouverture numérique en faisant un petit angle avec ledit axe.

10. Détecteur selon la revendication 9, **caractérisé par le fait que** les moyens d'illumination et les moyens de collecte sont constitués par les mêmes moyens optique.

11. Détecteur selon la revendication 6, **caractérisé par le fait qu'**un liquide est disposé entre le capillaire (2) et le moyen optique (10) à haute ouverture numérique.

12. Détecteur selon l'une des revendications 1 à 11, **caractérisé par le fait que** la cellule est ovoïde.

13. Appareil d'électrophorèse capillaire incluant un détecteur de fluorescence induite par laser selon l'une des revendications 1 à 12.

14. Appareil de chromatographie liquide incluant un détecteur de fluorescence induite par laser selon l'une des revendications 1 à 12.

15. Procédé pour identifier des substances inconnues **caractérisé par le fait qu'**il comprend les étapes suivantes:

- émettre un faisceau laser vers une cellule (4) ménagée à l'intérieur d'un capillaire (2), ladite cellule (4) recevant un soluté contenant au moins une substance inconnue, qui génère une fluorescence à la longueur d'onde du laser, ladite cellule (4) comportant des contours géométriques spécifiques pour éviter mélange laminaire et turbulence pendant l'écoulement du soluté,
- illuminer ladite substance fluorescente par ledit faisceau laser grâce à des moyens optiques (6, 10) générant un faisceau divergent qui illumine le volume de la cellule (4),
- collecter la fluorescence émise par la substance fluorescente, l'émission laser, le capillaire (2) et la collecte de la fluorescence étant mis en place pour coopérer optiquement de façon colinéaire,
- collecter et filtrer la fluorescence,
- transmettre la fluorescence filtrée vers un tube photomultiplicateur (12),
- analyser les signaux générés par le tube photomultiplicateur (12) et présenter les résultats de l'analyse.

16. Procédé selon la revendication 15, **caractérisé par le fait que** l'on convertit d'abord le faisceau laser (8) en un faisceau légèrement convergent grâce à une lentille (6) d'émission de faible ouverture numérique et que l'on convertit ensuite ce faisceau convergent en un faisceau divergent grâce à une lentille (10) à haute ouverture numérique.

17. Procédé selon l'une des revendications 15 ou 16, **caractérisé par le fait que** l'on utilise pour collecter la fluorescence les mêmes moyens optiques (6, 10) que pour illuminer la cellule.

**Patentansprüche**

1. Detektor für laserinduzierte Fluoreszenz mit:

   - Mitteln (5) zum Ausstrahlen eines Laserstrahls (8)
   - einer Zelle (4) im Inneren einer Kapillare (2), wobei die Zelle (4) eine Lösung aufnimmt, die wenigstens eine unbekannte bei der Wellenlänge des Lasers fluoreszierende Substanz enthält und die eine bestimmte geometrische Kontur aufweist, um beim Durchströmen der Lösung eine laminare Vermischung und Turbulenz zu vermeiden,
   - Beleuchtungsmitteln (6, 10) der durch die Zelle (4) der Kapillare (2) strömenden fluoreszierenden Substanz durch den Laserstrahl, wobei diese Mittel einen divergenten Strahl erzeugen, der das Volumen der Zelle (4) beleuchtet,

   - Sammelmitteln (10, 6) für die durch die fluoreszierende Substanz in der Zelle (4) emittierte Fluoreszenzstrahlung, wobei der Emissionslaser, die Kapillare (2) und der Fluoreszenzsammler so angeordnet sind, dass sie optisch kolinear zusammenwirken,
   - Mitteln (11) zum Filtern der gesammelten Fluoreszenzstrahlung,
   - Mitteln, die eine Photomultiplierröhre (12) verwenden, zur Verarbeitung der gefilterten Fluoreszenzstrahlung, und
   - Mitteln (13) zur Analyse der durch die Mittel, die eine Photomultiplierröhre (12) verwenden, erzeugten Signale und zur Darstellung der Ergebnisse der Analyse.

2. Detektor gemäß Anspruch 1, **dadurch gekennzeichnet, dass** die Beleuchtungsmittel (6, 10) einerseits eine Emissionslinse (6), die einen leicht konvergenten Laserstrahl liefert, und andererseits ein optisches Mittel (10) mit großer numerischer Öffnung, das den leicht konvergenten Strahl in den das Volumen der Zelle (4) beleuchtenden divergenten Strahl umwandelt, aufweisen.

3. Detektor gemäß Anspruch 2, **dadurch gekennzeichnet, dass** der Abstand zwischen der Emissionslinse (6) und dem optischen Mittel (10) mit großer numerischer Öffnung zur Beleuchtung der Zelle (4) so gewählt wird, dass der Laserstrahl im Inneren des optischen Mittels (10) mit großer numerischer Öffnung fokussiert wird, wobei der Brennpunkt (F) in der Nähe der Außenfläche des optischen Mittels (10) mit großer numerischer Öffnung liegt.

4. Detektor gemäß Anspruch 3, **dadurch gekennzeichnet, dass** die Beleuchtungsmittel (6, 10) und die Zelle (4) aufeinander abgestimmt sind und eine Refativanordnung besitzen, die das durch den Laserstrahl beleuchtete Volumen der fluoreszierenden Substanz maximiert.

5. Detektor gemäß einem der Ansprüche 1 oder 4, **dadurch gekennzeichnet, dass** die Mittel zum Sammeln der Fluoreszenzstrahlung ein optisches Mittel (10) mit großer numerischer Öffnung aufweisen.

6. Detektor gemäß Anspruch 5 in Kombination mit einem der Ansprüche 2 bis 4, **dadurch gekennzeichnet, dass** das zur Beleuchtung der Zelle verwendete optische Mittel mit großer numerischer Öffnung mit demjenigen verbunden ist, das in dem Sammelmittel enthalten ist.

7. Detektor gemäß einem der Ansprüche 2 bis 4 für sich betrachtet oder in Kombination mit einem der Ansprüche 5 oder 6, **dadurch gekennzeichnet, dass** das zur Beleuchtung der Zelle und/oder als Sammelmittel verwendete optische Mittel mit großer numerischer Öffnung eine Linse (10) in Form einer Kugel ist.

8. Detektor gemäß Anspruch 7, **dadurch gekennzeichnet, dass** die Linse in Form einer Kugel eine Saphirkugel (10) ist.

9. Detektor gemäß einem der Ansprüche 1 bis 8, **dadurch gekennzeichnet, dass** das Mittel zur Ausstrahlung des Laserstrahls, die Emissionslinse (6) das Mittel (10) mit großer numerischer Öffnung zur Beleuchtung der Zelle (4) und die Zelle (4) selbst so angeordnet sind, dass der Laserstrahl die Emissionslinse (6) bezüglich ihrer optischen Achse leicht versetzt erreicht und anschließend das optische Mittel (10) mit großer numerischer Öffnung unter einem kleinen Winkel mit der Achse erreicht.

10. Detektor gemäß Anspruch 9, **dadurch gekennzeichnet, dass** die Beleuchtungsmittel und die Sammelmittel aus denselben optischen Mitteln bestehen.

11. Detektor gemäß Anspruch 6, **dadurch gekennzeichnet, dass** eine Flüssigkeit zwischen der Kapillare (2) und dem optischen Mittel (10) mit großer numerischer Öffnung angeordnet ist.

12. Detektor gemäß einem der Ansprüche 1 bis 11, **dadurch gekennzeichnet, dass** die Zelle eiförmig ist.

13. Vorrichtung zur Kapillarelektrophorese mit einem Detektor für laserinduzierte Fluoreszenz gemäß einem der Ansprüche 1 bis 12.

14. Vorrichtung zur Flüssigchromatographie mit einem Detektor für laserinduzierte Fluoreszenz gemäß einem der Ansprüche 1 bis 12.

15. Verfahren zur Identifikation von unbekannten Substanzen, **dadurch gekennzeichnet, dass** es die folgenden Schritte umfasst:

- Ausstrahlen eines Laserstrahls zu einer im Inneren einer Kapillare (2) ausgesparten Zelle (4), wobei die Zelle (4) eine Lösung aufnimmt, die wenigstens eine unbekannte Substanz enthält, die bei der Wellenlänge des Lasers eine Fluoreszenzstrahlung erzeugt, wobei die Zelle (4) bestimmte geometrische Konturen aufweist, um eine laminare Vermischung und Turbulenz während des Durchströmens der Lösung zu vermeiden
- Beleuchten der fluoreszierenden Substanz durch den Laserstrahl mittels optischer Mittel (6, 10) die einen divergenten Strahl erzeugen, der das Volumen der Zelle (4) beleuchtet,

- Sammeln der durch die floreszierende Sub-stanz emittierte Fluoreszenzstrahlung, wobei der Emissionslaser, die Kapillare (2) und die Fluoreszenzsammelmittel so angeordnet sind, dass sie optisch kolinear zusammenwirken,
- Sammeln und Filtern der Fluoreszenzstrah-lung,
- Übertragen der gefilterten Fluoreszenzstrah-lung auf eine Photomultiplierröhre (12),
- Analysieren der durch die Photomultiplierröhre (12) erzeugten Signale und Darstellen der Analyseergebnisse.

16. Verfahren gemäß Anspruch 15, **dadurch gekennzeichnet, dass** man den Laserstrahl (8) zunächst mittels einer Emissionslinse (6) mit geringer numerischer Öffnung in einen leicht konvergenten Strahl umwandelt und dass man anschließend den konvergenten Strahl mittels einer Linse (10) mit großer numerischer Öffnung in einen divergenten Strahl umwandelt.

17. Verfahren nach einem der Ansprüche 15 oder 16, **dadurch gekennzeichnet, dass** man zum Sammeln der Fluoreszenz dieselben optischen Mittel (6, 10) wie zum Beleuchten der Zelle verwendet.

## Claims

1. A laser induced fluorescence detector comprising:

- means (5) for transmitting a laser beam (8),
- a cell (4) inside a capillary (2), said cell (4) receiving a solute which contains at least one unknown substance fluorescing at the wavelength of the laser and having special geometric outlines so as to prevent laminar mixing and turbulence while said solute flows,
- means (6, 10), of illuminating, by means of said laser beam, said fluorescent substance flowing in the cell (4) of the capillary (2), these means generating a divergent beam which illuminates the volume of the cell (4),
- means (10, 6) of collecting the fluorescence emitted by the fluorescent substance in the cell (4), the laser transmission, the capillary (2) and the fluorescence collector being set up in order to cooperate optically in collinear manner,
- means (11) to filter said collected fluorescence,
- means using a photomultiplier tube (12) to process the filtered fluorescence, and
- means (13) to analyze the signals generated by said means using a photomultiplier tube (12) and to present the results of said analysis.

2. The detector as claimed in claim 1, **characterized in that** the illumination means (6, 10) include, firstly, a transmission lens (6) providing a slightly convergent laser beam and, secondly, a high numerical aperture optical means (10) converting said slightly convergent beam in order to obtain the divergent beam, which illuminates the volume of the cell (4).

3. The detector as claimed in claim 2, **characterized in that** the distance between the transmission lens (6) and the high numerical aperture optical means (10) intended to illuminate the cell (4) is adjusted so as to focus the laser beam inside said high numerical aperture optical means (10), the focal point F being close to the outer surface of said high numerical aperture optical means (10).

4. The detector as claimed in claim 3, **characterized in that** the illumination means (6, 10) and the cell (4) are shaped and have a relative position so as to maximize the volume of fluorescent substance illuminated by the laser beam.

5. The detector as claimed in either of claims 1 and 4, **characterized in that** the means of collecting the fluorescence include a high numerical aperture optical means (10).

6. The detector as claimed in claim 5 taken in combination with one of claims 2 to 4, **characterized in that** the high numerical aperture optical means used to illuminate the cell is the same one as is included in the collection means.

7. The detector as claimed in one of claims 2 to 4 taken alone or in combination with one of claims 5 and 6, **characterized in that** the high numerical aperture optical means used to illuminate the cell and/or for the collection means is a ball-shaped lens (10).

8. The detector as claimed in claim 7, **characterized in that** the ball-shaped lens is a sapphire ball (10).

9. The detector as claimed in one of claims 1 to 8, **characterized in that** the means for transmitting the laser beam, the transmission lens (6), the high numerical aperture optical means (10) intended to illuminate the cell (4) and said cell (4) itself are arranged such that the laser beam reaches the transmission lens (6) slightly offset with respect to its axis and then reaches the high numerical aperture optical means (10) at a small angle to said axis.

10. The detector as claimed in claim 9, **characterized in that** the illumination means and the collection means consist of the same optical means.

11. The detector as claimed in claim 6, **characterized in that** a liquid is placed between the capillary (2) and the high numerical aperture optical means (10).

12. The detector as claimed in one of claims 1 to 11, **characterized in that** the cell is ovoid.

13. Capillary electrophoresis apparatus including a laser induced fluorescence detector as claimed in one of claims 1 to 12.

14. Liquid chromatography apparatus including a laser induced fluorescence detector as claimed in one of claims 1 to 12.

15. A method of identifying unknown substances **characterized in that** it comprises the following steps:

    - transmitting a laser beam toward a cell (4) made inside a capillary (2), said cell (4) receiving a solute containing at least one unknown substance, which generates fluorescence at the wavelength of the laser, said cell (4) comprising special geometric outlines in order to prevent laminar mixing and turbulence while the solute is flowing,
    - illuminating said fluorescing substance by means of said laser beam using optical means (6, 10) generating a divergent beam which illuminates the volume of the cell (4),
    - collecting the fluorescence emitted by the fluorescent substance, the laser transmission, the capillary (2) and the fluorescence collector being set up in order to cooperate optically in a collinear manner,
    - collecting and filtering the fluorescence,
    - transmitting the filtered fluorescence toward a photomultiplier tube (12),
    - analyzing the signals generated by the photomultiplier tube (12) and presenting the results of the analysis.

16. The method as claimed in claim 15, **characterized in that** firstly, the laser beam (8) is converted into a slightly convergent beam using a low numerical aperture transmission lens (6) and **in that** this convergent beam is then converted into a divergent beam using a high numerical aperture lens (10).

17. The method as claimed in one of claims 15 and 16, **characterized in that** the same optical means (6, 10) are used to collect the fluorescence as are used to illuminate the cell.

FIG.1

FIG.2

FIG.3